# EUROPÄISCHE PATENTANMELDUNG

(11) **EP 1 447 207 A1**
(43) Veröffentlichungstag der Anmeldung: **18.08.2004**
(21) Anmeldenummer: 04003273.2
(22) Anmeldetag: 13.02.2004
(51) Int. Cl.: B29C 67/24, B29C 31/06

(54) **Vorrichtung und Verfahren zum Herstellen eines Spritzgussteils**

(30) Priorität: 13.02.2003 DE 10306027
(71) Anmelder: M. Huber I.T.S. GmbH, 21493 Schwarzenbek (DE)
(72) Erfinder: Huber, Michael, 21493 Schwarzenbek (DE); Wilson, Neil, Sefton NSW (AU)
(74) Vertreter: VOSSIUS & PARTNER

(57) **Zusammenfassung**

Die Erfindung betrifft eine Spritzgussvorrichtung mit einer Kolbenkammer (3) und einem darin beweglichen Kolben (5). Der Kolben weist ein Ringkolbenelement (7) auf und die Kolbenkammer (3) weist vorzugsweise im Bereich des Bodens mindestens eine Einspritzdüse (31) auf. Einer Mischeinrichtung werden die mindestens zwei Komponenten (A, B) eines Spritzgussmaterials (41) von mindestens einer Dosiereinheit (63) zugeführt. Die Komponenten werden geeignet vermischt und in die Kolbenkammer gefördert. Das Ringkolbenelement ist so ausgebildet, dass es durch einen Antrieb (17) zumindest während des Befüllens der Kolbenkammer entgegen der Einspritzdüse bewegbar ist und dabei einen Unterdruck erzeugt. Das Ringkolbenelement (7) dient zum Einspritzen des Spritzgussmaterials in eine Spritzgussform (35) und ist so ausgebildet, dass es durch den Antrieb (17) in Richtung der Einspritzdüse (31) bewegbar ist und einen zum Einspritzen des Spritzgussmaterials in die Form geeigneten Druck erzeugt.

## Beschreibung

Die Erfindung betrifft eine Vorrichtung und ein Verfahren zur Herstellung eines Spritzgussteils vorzugsweise aus Flüssigsilikon (LSR).

Aus dem Stand der Technik ist bisher bei der Formgebung im Spritzgussverfahren bekannt, dass das Material, beispielsweise Flüssigsilikon, welches in der Regel aus zwei Komponenten besteht, über eine Dosiereinrichtung in einen Mischkopf gepumpt, dort gemischt und von dort in eine spritzdruckerzeugende Vorrichtung gefördert wird. Die spritzdruckerzeugende Vorrichtung fördert das Flüssigsilikon in eine Spritzgussform. Diese Spritzgussform wird durch äußere Schließkräfte der Spritzgießmaschine während des Einspritzens und Ausvulkanisierens zusammengehalten. Die für das Ausvulkanisieren erforderliche Temperatur der Spritzgussform wird durch Heizplatten in der Schließeinheit der Spritzgießmaschine erzeugt. Die spritzdruckerzeugende Vorrichtung ist Bestandteil der Spritzgießmaschine.

Von der spritzdruckerzeugenden Vorrichtung kann das Flüssigsilikon in eine Eintrittsöffnung in das Spritzgießwerkzeug gepresst werden. Die Verteilung des Flüssigsilikons in die einzelnen Formnester erfolgt über im Spritzgießwerkzeug befindliche Zuführkanäle. Das in der Einspritzöffnung und in den Zuführkanälen befindliche Flüssigsilikon wird durch die Wärmeeinwirkung ebenfalls ausvulkanisiert.

Das Verfahren hat jedoch den Nachteil, dass die Dosierung des Flüssigsilikons in die Formnester äußerst schwierig ist. Dies hat zur Folge, dass Nachbearbeitungen notwendig sind mit entsprechend verbundenen zusätzlichen Kosten sowie Materialverluste eintreten.

Alternativ kann die spritzdruckerzeugende Vorrichtung das Flüssigsilikon in eine Eintrittsöffnung eines dem Spritzgießwerkzeug vorgelagerten Kaltkanals pressen. Der Kaltkanal übernimmt die Zuführung des Flüssigsilikons in die Formnester. Hierbei ist der Kaltkanal temperiert und verhindert so das Ausvulkanisieren des Flüssigsilikons bevor es in die Formnester gelangt. Die Zuführkanäle des Kaltkanals sind statisch und in ihrer Lage nicht veränderbar.

Dies hat jedoch den Nachteil, dass bei der Zuhilfenahme eines Kaltkanals Schwierigkeiten bei der Dosierung der Formnesterfüllungen entstehen können sowie Undichtigkeiten bei dem Kaltkanal auftreten können welche nur durch sehr genaue Passungen oder Dichtungen verhindert werden können.

Weitere Nachteile des zuvor genannten Standes der Technik sind, dass bei den genannten Verfahren eine sehr kostenintensive Spritzgießmaschine sowie Spritzaggregat notwendig sind. Eine exakte Dosierung des Füllvolumens kann nur mit hohem Aufwand realisiert werden. Des weiteren kommt es zu sehr hohen Materialverlusten wenn kein Kaltkanal vorgelagert ist.

Aufgabe der Erfindung ist es daher eine Vorrichtung und ein Verfahren zum kostengünstigen Herstellen von Spritzgussteilen bereitzustellen, bei dem verhindert wird, dass die Düsen verstopfen können bevor das Spritzgussmaterial in die Form eingespritzt wird.

Diese Aufgabe wird erfindungsgemäß durch eine Vorrichtung mit den in Patentanspruch 1 angegebenen Merkmalen bzw. ein Verfahren mit den in Patentanspruch 29 angegebenen Merkmalen gelöst.

Der Erfindung liegt dabei der Gedanke zugrunde eine Spritzgussvorrichtung und ein Verfahren bereitzustellen, bei dem beim Befüllen der Kolbenkammer der Kolben in der Kammer so bewegt wird, dass kein Spritzgussmaterial in die Einspritzdüsen der Kolbenkammer gelangt und diese verstopfen kann und so den Einspritzvorgang des Materials in eine Spritzgussform behindern kann.

Hierzu wird erfindungsgemäß eine Kolbenkammer bereitgestellt, die einen darin beweglichen Kolben aufweist, wobei der Kolben ein Ringkolbenelement umfasst. Die Kolbenkammer wird über eine Mischeinrichtung befüllt, wobei das Ringkolbenelement sich zumindest beim Befüllen entgegen der Einspritzdüse bewegt und dabei einen Unterdruck erzeugt, der die Einspritzdüsen von Spritzgussmaterial frei hält. Des weiteren bewegt sich das Ringkolbenelement hin zu der Einspritzdüse um einen geeigneten Druck zu erzeugen zum Einspritzen des Materials aus der Kolbenkammer durch die Einspritzdüse in die Spritzgussform.

Das Erzeugen des Unterdrucks hat den Vorteil, das die Einspritzdüse nicht verstopft und den Einspritzvorgang behindern kann. Des weiteren ist kein teures Ventil notwendig das in die Einspritzdüse zu diesem Zweck angebracht wird.

Vorteilhafte Ausgestaltung und Weiterbildungen sind in den Unteransprüchen dargestellt.

Ausführungsbeispiele der Erfindung werden unter Bezugnahme auf folgende Zeichnung näher beschrieben.

Es zeigt:
Figur 1 eine Vorrichtung gemäß der Erfindung, die einen statischen Mischkopf aufweist,
Figur 2 eine Ausführungsform der Vorrichtung der Erfindung, die einen dynamischen Mischkopf aufweist,
Figur 3 eine weitere Ausführungsform der Vorrichtung der Erfindung, die einen statischen Mischkopf aufweist, wobei eine Kolbenanordnung in einer Kolbenkammer der Vorrichtung in einer Ausgangsposition angeordnet ist,
Figur 4 die Vorrichtung gemäß Figur 3, wobei Spritzgussmaterial der Kolbenkammer zugeführt wird, und
Figur 5 die Vorrichtung gemäß der Figuren 3 und 4, wobei das Spritzgussmaterial aus der Kolbenkammer in Formnester einer Spritzgussform verdrängt wird.

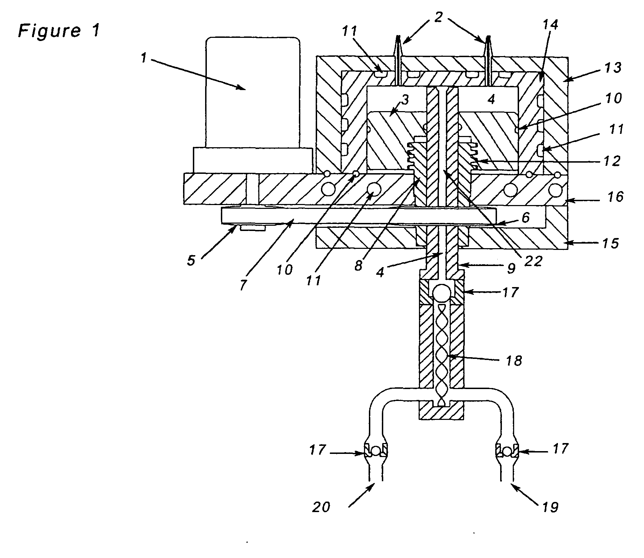

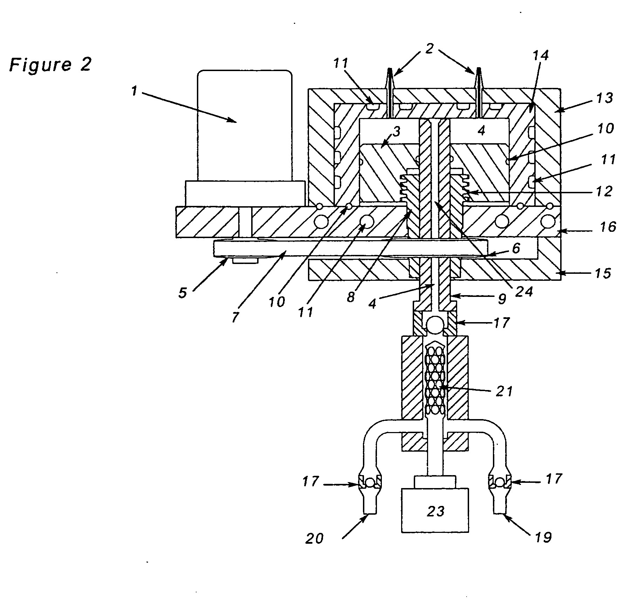

Anhand der Figuren 1 und 2 wird zunächst der Aufbau von zwei Ausführungsformen der erfindungsgemäßen Vorrichtung beschrieben.

Die Vorrichtung 1, wie sie in den Figuren 1 und 2 dargestellt ist, weist eine Kolbenkammer 3 auf in der ein Kolben 5 beweglich angeordnet ist. Der Kolben 5 besteht aus einem Ringkolbenelement 7 das über ein Gewinde 9 mit einer Zuführeinrichtung 11 verbunden ist.

Die Zuführeinrichtung 11 selbst besteht aus einem Eingangsrohr 13 auf dem ein Drehbewegungsumrichter 15 mit dem Gewinde 9 angeordnet ist. Der Drehbewegungsumrichter 15 wird über ein Antriebssystem 17 bewegt, so dass er durch seine Rotationsbewegung eine Hin- und Herbewegung des Ringkolbenelements 7 in der Kolbenkammer 3 erzeugen kann.

In der vorliegenden Ausführungsform besteht das Antriebssystem 17 aus zwei Rollen 19, 21 auf der Antriebs- und Abtriebsseite des Systems 17. Die Rollen 19, 21 sind über einen Treibriemen 23 miteinander verbunden und werden durch einen Motor 25 betrieben. Das Antriebssystem 17 wird vorzugsweise über eine Steuereinrichtung gesteuert, um so die Bewegung des Ringkolbenelements zu steuern.

Neben dem vorgenannten Antriebssystem 17 ist aber auch jedes andere Antriebssystem denkbar, so kann neben einem Riemenantrieb auch ein Zahnriemen- oder Kettenantrieb oder ein Zahnradgetriebe vorgesehen werden sowie jede andere Art von Rollenanordnung. Des weiteren kann das Ringkolbenelement 7 auch über eine Elektrik, Pneumatik und/oder Hydraulik bewegt werden.

Der Motor 25 und die Antriebsrolle 19 sind an einer Abschlussplatte 27 der Kolbenkammer 3 befestigt während die Abtriebsrolle 21 auf dem Drehbewegungsumrichter 15 zwischen der Abschlussplatte 27 und einer Halteplatte 20 angeordnet ist.

Im weiteren wird nun die Ausgestaltung der Kolbenkammer 3 näher beschrieben.

Wie aus den Figuren 1 und 2 zu entnehmen ist, ist das Ringkolbenelement 7 gegenüber der Kolbenkammer 3 und der Zuführeinheit 11 abgedichtet, um ein seitliches Austreten von Spritzgussmaterial am Ringkolbenelement 7 während des Hin- und Herbewegens zu verhindern. Eine solche Abdichtung kann vorzugsweise über eine Membran oder über einen Dichtring 29 erfolgen.

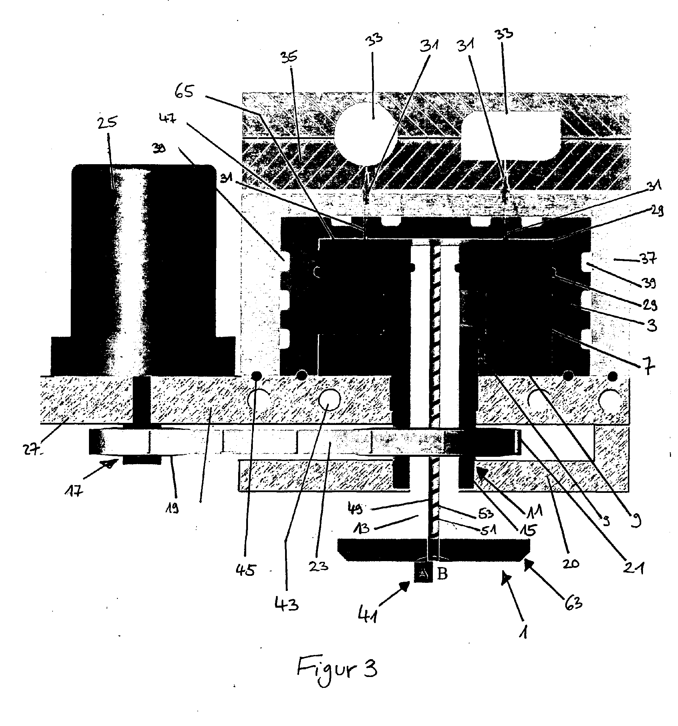

Die Kolbenkammer 3 weist des weiteren an ihrem Boden wenigstens eine Einspritzdüse 31 auf, durch die das Spritzgussmaterial in Formnester 33 einer Spritzgussform 35 eingeführt werden kann (siehe Figuren 3 bis 5).

Die Kolbenkammer 3 kann, wie in den Figuren 1 und 2 dargestellt, einteilig oder aber auch mindestens zweiteilig ausgebildet sein. Ein innerer Teil der Kolbenkammer 3 kann dabei als Wechseleinsatz (nicht dargestellt) ausgeführt werden, wobei Wechseleinsätze mit verschiedenen Einspritzdüsenanordnungen eingesetzt werden können.

Grundsätzlich besteht aber auch die Möglichkeit die Einspritzdüse der Kolbenkammer 3 mit einem Wechseleinsatz in Verbindung zu bringen, wobei der Wechseleinsatz in diesem Fall als ein Teil der Spritzgussform 35 ausgebildet ist (nicht dargestellt). Hierbei können Wechseleinsätze mit verschiedenen Anordnungen von Einspritzdüsen 31 eingesetzt werden.

Solche Wechseleinsätze haben den Vorteil, dass eine Spritzgussmaschine für unterschiedlichste Anforderungen angepasst werden kann und dieses auf sehr einfache und kostengünstige Art und Weise. Solche Anforderungen betreffen beispielsweise unterschiedliche Spritzgussformen die unterschiedlich große, unterschiedlich angeordnete und/oder eine unterschiedliche Anzahl von Einspritzdüsen benötigen.

Wie aus den Figuren 1 und 2 des weiteren hervorgeht, kann die Kolbenkammer 3 temperiert ausgebildet werden. Hierzu weist die Kammer 3 einen Außenmantel 37 auf.

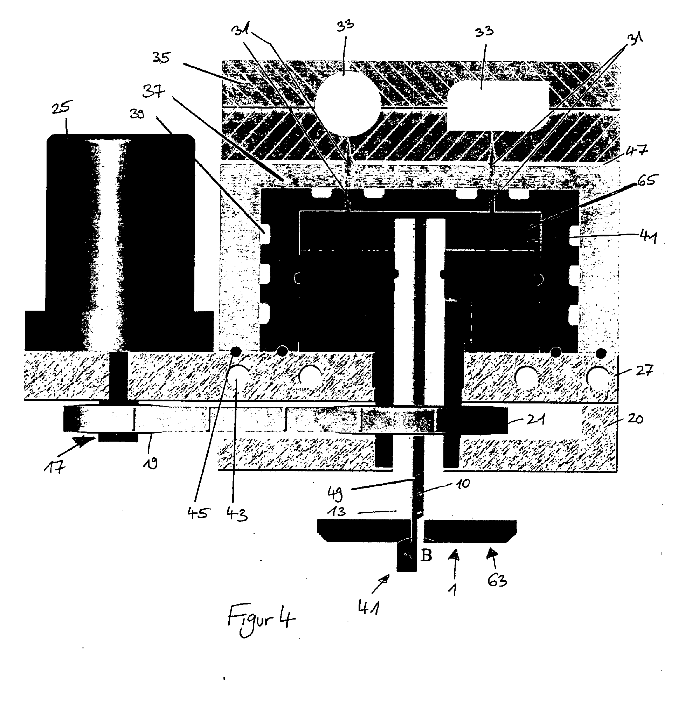

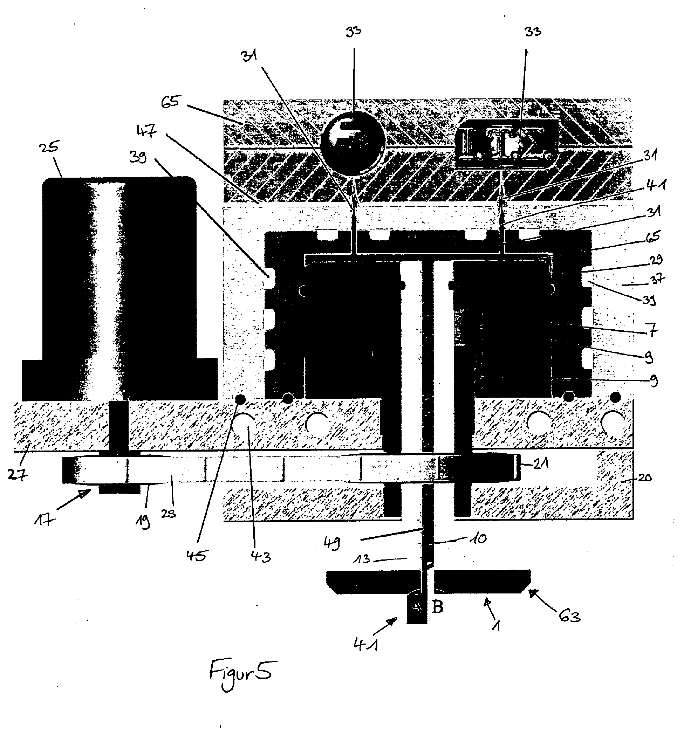

Zum Temperieren können Hohlräume in Form von Kühlrippen 39 am Außenmantel 37 angebracht werden (nicht dargestellt). Die Kühlrippen können jedoch auch an einer Außenwand der Kolbenkammer 3 vorgesehen sein. Das Temperieren erfolgt indem ein geeignetes Kühlmedium in die Hohlräume eingeleitet wird, dadurch wird erreicht, dass Spritzgussmaterial 41 welches in eine Materialkammer 65 der Kolbenkammer 3 gefüllt wird nicht Ausvulkanisieren kann bevor es in die Spritzgussform 35 gefüllt wird (siehe Figuren 4 und 5).

Des weiteren können auch Kühlkanäle 43 in Form von Kühlbohrungen beispielsweise in der Abschlussplatte 27 der Kolbenkammer 3 alternativ oder zusätzlich zu den Kühlrippen 39 vorgesehen werden. Die Kolbenkammer 3 und der Außenmantel 37 sind dabei gegenüber der Abschlussplatte 27 abgedichtet, vorzugsweise mittels Dichtringen 45.

In einer bevorzugten Ausführungsform ist auch die Einspritzdüse 31 der Kolbenkammer 3 temperiert ausgebildet. Eine solche Temperierung der Einspritzdüse 31 kann direkt und/oder indirekt erfolgen.

Bei einer direkten Temperierung der Einspritzdüse 31 ist diese an einen eigenen oder einen Kühlkreislauf der Kolbenkammer 3 angeschlossen.

Bei einer indirekten Temperierung erfolgt die Temperierung über eine Temperaturtransferhülse (nicht dargestellt) die über die Einspritzdüse 31 geschoben wird. Diese Temperaturtransferhülse liegt hierbei an der Kolbenkammer 3 an und überträgt deren Temperatur auf die Einspritzdüse 31.

Eine solche direkte oder indirekte Temperierung der Einspritzdüse 31 hat den Vorteil, dass ein eventuelles oder zumindest teilweises Ausvulkanisieren des Spritzgussmaterials innerhalb der Einspritzdüse 31 verhindert werden kann. Dies hat den Vorteil, dass ein Verstopfen der Einspritzdüse verhindert wird und die damit verbundenen Nachteile, wie Unterbrechung des Betriebsablaufs, aufwendige Reinigung der Düse(n), Herstellen eines fehlerhaften Spritzgussteils.

Des weiteren kann eine Isolierung 47 zwischen der Kolbenkammer 3 bzw. ihrem Außenmantel 37 und der Spritzgussform 35 vorgesehen werden, um so einen Temperaturtransfer zwischen der beheizten Spritzgussform 35 und der temperierten Kolbenkammer 3 zu verhindern.

Vorzugsweise ist dabei die Isolierung 47 in Form z.B. einer Isolierplatte zwischen einem Kolbenkammerboden, der mindestens eine Einspritzdüse 31 aufweist, und einer Heizplatte (nicht dargestellt) zum Aufheizen der Spritzgussform 35 vorgesehen.

Weiter sollen nun die verschiedenen Ausführungsformen der Zuführeinrichtung 11 anhand der Figuren 1 und 2 näher erläutert werden.

Die Zuführeinrichtung 11 gemäß Figur 1 verfügt über eine Mischeinrichtung mit einem statischen Mischkopf 49. Dieser weist, wie in Figur 1 dargestellt, zwei Spiralen 51, 53 auf, die ineinander laufen und sich in ihrem Verlauf in Richtung der Kolbenkammer 3 vereinen und eine sog. Wirbelspirale bilden.

Der statische Mischkopf 49 kann vorzugsweise im Inneren des Ringkolbenelements 7 angeordnet sein und in der Kolbenkammer 3 enden oder wie in den Figuren 3 bis 5 dargestellt durchgehend vorgesehen sein.

Am Ende oder am Anfang dieses Mischkopfs 49 ist eine Rückstromsperre oder, wie dargestellt, ein Rückschlagventil 55 angeordnet. Diese verhindern das Zurückfließen von Spritzgussmaterial 41 aus der Materialkammer 65.

In einer weiteren Ausführungsform der Erfindung, wie in Figur 2 dargestellt, weist die Mischeinrichtung einen dynamischen Mischkopf 57 auf.

Der dynamische Mischkopf 57 verfügt dabei über einen separaten Antrieb 59, der einen Kugelkäfig 61 des Mischkopfs 57 rotierend bewegt. Durch die Rotationsbewegung entstehen ähnlich wie bei dem statischen Mischkopf 49 Verwirbelungen, welche beispielsweise Komponenten A und B des Spritzgussmaterials 41 vermischen. Vorzugsweise werden die Komponenten A und B zu einer homogenen Masse vermischt.

Der dynamische Mischkopf 57 kann, wie in Figur 2 dargestellt, in einem Bereich oberhalb der Kolbenkammer 3 angeordnet sein, oder auch an einer Position 67, im Bereich der Kolbenkammer 3. Dies gilt ebenso für den statischen Mischkopf 49, der wie in Figur 1 dargestellt, in einem Abschnitt oberhalb der Kolbenkammer 3 angeordnet ist oder, wie in den Figuren 3 bis 5 dargestellt, nahezu durchgehend in der Zuführeinrichtung 11 vorgesehen ist und sich bis zum Ende der Kolbenkammer 3 erstreckt. Der statische Mischkopf 49 kann alternativ auch an einer Position 69 angeordnet werden, in einem Abschnitt im Bereich der Kolbenkammer 3.

Die Zuführung des Spritzgussmaterials erfolgt vorzugsweise durch eine Dosierpumpe 63 welche die Komponenten A und B des Spritzgussmaterials im richtigen Verhältnis zueinander in den statischen bzw. dynamischen Mischkopf 49, 57 fördert. Vorzugsweise sind die Zuführungen der Dosiereinheit 63 ebenfalls mit Rückschlagventilen 55 oder Rückstromsperren versehen, um ein Zurückfließen der jeweiligen Komponenten A und B zu verhindern.

Grundsätzlich ist auch denkbar, dass mehr als zwei Komponenten in dem jeweiligen Mischkopf 49, 57 vermischt werden. Hierbei sind vorzugsweise mehr als zwei Spiralen in dem statischen Mischkopf vorgesehen.

Im Gegensatz zum oben beschriebenen Stand der Technik ist die Plastifiziereinheit gemäß der Erfindung statisch, da das Plastifizieren durch den durch die Dosiereinheit 63 erzeugten Druck erfolgt. Dies hat den Vorteil, dass keine teure rotierende Schnecke als Plastifiziereinheit verwendet werden muss, wie im Stand der Technik. Solche Schnecken bilden bisher mit eines der teuersten Elemente bei herkömmlichen Spritzgussmaschinen, so dass die Vorrichtung gemäß der Erfindung deutlich preisgünstiger ist gegenüber den bisher bekannten Spritzgussvorrichtungen. Als Dosiereinheit wird vorzugsweise eine Förderpumpe verwendet.

Bei den in den Figuren 1 bis 5 dargestellten Vorrichtungen wird das Material (vorzugsweise Flüssigsilikon (LSR)) von unten, entgegen der Schwerkraft, in die Materialkammer 65 eingefüllt. Genauso denkbar ist aber auch, dass das Spritzgussmaterial 41 von oben, sozusagen mit der Schwerkraft, in die Materialkammer 65 eingefüllt wird.

Wird das Spritzgussmaterial durch die Einspritzdüse 31 in die Spritzgussform 35 gepresst, so kann das Zurückfließen des Spritzgussmaterials aus der Spritzgussform 35 durch Hilfsmittel in Form von Ventilen (nicht dargestellt) verhindert werden, die z.B. in den Einspritzdüsen 31 angeordnet sind.

In einer besonders bevorzugten Ausführungsform ist, statt eines zusätzlichen Ventils, die Einspritzdüse 31 in ihrem Durchmesser so klein gewählt, dass die Düse 31 sofort nach Beendigung des Einspritzvorgangs ausvulkanisiert und verschließt. Dies bedeutet, dass erst nach einer definierten Zeit der Kolben zurückgezogen wird. Dies hat den Vorteil, dass ohne zusätzliche Ventile auf sehr einfache und kostengünstige Weise ein Zurückfließen von Spritzgussmaterial aus der Spritzgussform verhindert werden kann, nach dem Einspritzvorgang. Beim Befüllen der Materialkammer 65 wird die Einspritzdüse 31, wie oben beschrieben, frei von Spritzgussmaterial gehalten durch Erzeugen eines Unterdrucks.

Alternativ kann auch vorgesehen werden, dass die Düse 31 durch eine Nadel (nicht dargestellt) verschlossen wird.

Nachdem der Kolben nach einer definierten Zeit zurückgezogen wird, wird weiteres Material der Kolbenkammer 3 zugeführt, das für den nächsten Zyklus benötigt wird.

Im weiteren wird nun die Funktionsweise und das Verfahren zum Herstellen eines Spritzgussteils anhand der Figuren 3 bis 5 näher erläutert.

In der Darstellung in Figur 3, befindet sich der Kolben in einer Ausgangsstellung, in der die Materialkammer 65 der Kolbenkammer 3 zunächst leer ist. Zum Befüllen der Materialkammer 65 wird gemäß der Ausführungsformen, wie in den Figuren 1 und 3 bis 5 dargestellt, zwei Komponenten A, B über eine Dosiereinheit 63 dem statischen Mischkopf zugeführt und in diesem über die Spiralen 51, 53 vorzugsweise homogen vermischt.

Wie oben bereits beschrieben erfolgt das Plastifizieren durch den durch die Dosiereinheit 63 erzeugten Druck, so dass keine Plastifizierungsschnecke benötigt wird.

Während das Spritzgussmaterial in die Materialkammer 65 gefördert wird, wird der Drehbewegungsumrichter 15 von dem Antriebssystem 17 angetrieben und der Kolben weg vom Kolbenkammerboden bewegt. Dies erfolgt genauer gesagt indem das Ringkolbenelement 7 auf dem Gewinde 9 des Drehbewegungsumrichters 15 vom Kolbenkammerboden weg nach oben geschraubt wird. Das Ringkolbenelement 7 wird dabei entgegen der Einspritzdüsen 31 bewegt, so dass ein Unterdruck erzeugt wird. Der Unterdruck dient dazu, dass ein Fliessen von Spritzgussmaterial in die Einspritzdüsen verhindert werden kann.

Aus dem Stand der Technik ist zwar bekannt, dass der Kolben mit dem Befüllen der Kolbenkammer zurückgedrängt wird, erfindungsgemäß wird aber das Ringkolbenelement so zurückbewegt, dass ein spezieller Unterdruck erzeugt wird, der ein Fliessen des Materials in die Einspritzdüsen vor dem eigentlichen Einspritzvorgang verhindert.

Das Erzeugen eines Unterdrucks gemäß der Erfindung hat den Vorteil, dass die Einspritzdüsen ohne zusätzliche Aufwendungen frei gehalten werden können und kein Spritzgussmaterial in die Düsen gelangen kann und diese verstopft. Es sind insbesondere keine zusätzlichen Ventile an den Einspritzdüsen notwendig die ein solches verhindern.

Nach dem Befüllen der Materialkammer 65 wird die Antriebsrichtung des Antriebssystems 17 geändert, so dass das Ringkolbenelement 7 über den Drehbewegungsumrichter 15 hin zu den Einspritzdüsen 31 bewegt wird und ein ausreichender Druck erzeugt wird, um das Spritzgussmaterial durch die Düsen 31 in die Formnester 33 der Spritzgussform 35 einzuspritzen, wie in den Figuren 4 und 5 dargestellt.

Nach dem der Einspritzvorgang abgeschlossen ist, wird der Kolben vorzugsweise erst nach einer definierten Zeitspanne zurückgezogen, wenn das Spritzgussmaterial in dem Einspritzkanal der Spritzgussform 35 ausvulkanisiert ist, so dass beim Zurückziehen kein Spritzgussmaterial aus der Spritzgussform herausgesaugt werden kann. Hierbei wird gleichzeitig weiteres Spritzgussmaterial über die Zuführeinrichtung der Materialkammer 35 zugeführt, das für den nächsten Zyklus benötigt wird.

Die Spritzgussform wird geöffnet und die hergestellten Spritzgussteile werden ausgeworfen, so dass die Spritzgussform anschließend für den nächsten Zyklus verwendbar ist.

## Patentansprüche

1. Spritzgussvorrichtung mit einer Kolbenkammer (3) und einem darin beweglichen Kolben (5) ,
wobei der Kolben ein Ringkolbenelement (7) aufweist und
die Kolbenkammer (3) vorzugsweise im Bereich des Bodens mindestens eine Einspritzdüse (31) aufweist, und
mit einer Mischeinrichtung (49, 57), der mindestens zwei Komponenten (A, B) eines Spritzgussmaterials (41) von mindestens einer Dosiereinheit (63) zugeführt wird,
wobei die Mischeinrichtung so ausgebildet ist, dass die Komponenten geeignet vermischt und in die Kolbenkammer gefördert werden, um diese zu Befüllen und
wobei das Ringkolbenelement so ausgebildet ist, dass es durch einen Antrieb (17) zumindest während des Befüllens der Kolbenkammer entgegen der Einspritzdüse bewegbar ist und dabei einen Unterdruck erzeugt, und
wobei das Ringkolbenelement (7) zum Einspritzen des Spritzgussmaterials in eine Spritzgussform (35) so ausgebildet ist, dass es durch den Antrieb (17) in Richtung der Einspritzdüse (31) bewegbar ist und einen zum Einspritzen des Spritzgussmaterials in die Form geeigneten Druck erzeugt.

2. Spritzgussvorrichtung nach Anspruch 1, **gekennzeichnet durch**, eine Steuereinrichtung die die Bewegung des Ringkolbenelements (7) und/oder den Antrieb des Ringkolbenelements (7) steuert.

3. Spritzgussvorrichtung nach Anspruch 1 oder 2 **dadurch gekennzeichnet, dass** das Ringkolbenelement (7) so ausgebildet ist, dass es bei der Bewegung entgegen der Einspritzdüse (31) in der Kolbenkammer (3) einen Unterdruck erzeugt, der geeignet ist, die Einspritzdüse (31) beim Befüllen der Kolbenkammer (3) von Spritzgussmaterial frei zu halten.

4. Spritzgussvorrichtung nach einem der Ansprüche 1 bis 3, **dadurch gekennzeichnet, dass** die Mischeinrichtung (49, 57) eine sich durch das Ringkolbenelement (3) erstreckende Zuführeinrichtung (11) mit einem Zuführkanal aufweist und/oder dass die Mischeinrichtung einen statischen Mischkopf (49) aufweist, der vorzugsweise mindestens eine Spirale (51, 53) aufweist durch die die Komponente (A, B) des Spritzgussmaterials zugeführt werden und/oder dass mindestens ein Abschnitt des Zuführkanals (11) vorzugsweise zwei ineinanderverlaufende Spiralen (51, 53) aufweist, die sich in deren Verlauf zu einer Spirale vereinen.

5. Spritzgussvorrichtung nach Anspruch 4 **dadurch gekennzeichnet, dass** die Mischeinrichtung einen dynamischen Mischkopf (57) aufweist, der einen Kugelkäfig aufweist, der über einen Antrieb rotierend bewegt wird, um durch die Rotationsbewegung die Komponenten (A, B) des Spritzgussmaterials zu vermischen.

6. Spritzgussvorrichtung nach Anspruch 4 oder 5 **dadurch gekennzeichnet, dass** ein Rückschlagventil (55) in dem Mischkopf (49, 57) vorgesehen ist zum Verhindern des Zurückfliessens von Spritzgussmaterial aus der Kolbenkammer (3).

7. Spritzgussvorrichtung nach einem der Ansprüche 1 bis 6, **dadurch gekennzeichnet, dass** das Ringkolbenelement (7) mit der Mischeinrichtung (49, 57) über ein Gewinde (9) verbunden ist vorzugsweise dass das Ringkolbenelement (7) über ein Gewinde (9) mit der Zuführeinrichtung (11) der Mischeinrichtung (49, 57) verbunden ist wobei vorzugsweise die Zuführeinrichtung (11) so bewegt wird, dass das Ringkolbenelement (7) durch das Gewinde (9) hin oder weg von der Einspritzdüse (31) bewegt wird.

8. Spritzgussvorrichtung nach einem der Ansprüche 1 bis 7, **dadurch gekennzeichnet, dass** die Seitenwände des Ringkolbenelements (7) gegenüber der Kolbenkammer (3) und/oder der Zuführeinrichtung (11) abgedichtet sind, so dass kein Spritzgussmaterial seitlich am Ringkolbenelement austreten kann.

9. Spritzgussvorrichtung nach einem der Ansprüche 1 bis 8, **dadurch gekennzeichnet, dass** die Kolbenkammer (3) mindestens zweiteilig ausgebildet ist und mindestens eine Einspritzdüse (31) aufweist, wobei vorzugsweise der innere Teil der Kolbenkammer (7) als Wechseleinsatz ausgebildet ist, wobei Wechseleinsätze mit verschiedenen Anordnungen von Einspritzdüsen (31) eingesetzt werden können, und wobei besonders bevorzugt die Einspritzdüse mit einem Wechseleinsatz in Verbindung bringbar ist, wobei der Wechseleinsatz als Teil der Spritzgussform (35) ausgebildet ist, und wobei Wechseleinsätze mit verschiedenen Anordnungen von Einspritzdüsen (31) eingesetzt werden können.

10. Spritzgussvorrichtung nach einem der Ansprüche 1 bis 9, **dadurch gekennzeichnet, dass** die Kolbenkammer (3) temperiert ausgebildet ist, wobei vorzugsweise die Kolbenkammer Kühlrippen (39) aufweist in die ein geeignetes Kühlmedium zum Temperieren der Kammer gefüllt werden kann, wobei die Kolbenkammer aus mindestens zwei Teilen (3, 37) besteht, einem inneren Teil der die Aufnahme für das Spritzgussmaterial bildet und einem äußeren Teil (37) der den Kühlkörper bildet, in den das Kühlmedium zwischen die Kühlrippen (39) gefüllt wird, und wobei besonders bevorzugt die Kolbenkammer (3) Kühlbohrungen (43) aufweist, in die ein geeignetes Kühlmedium zum Temperieren der Kammer gefüllt werden kann.

11. Spritzgussvorrichtung nach einem der Ansprüche 1 bis 10, **dadurch gekennzeichnet, dass** mindestens eine Einspritzdüse (31) direkt temperiert ausgebildet ist, indem sie an einen eigenen Kühlkreislauf angeschlossen ist oder an einen Kühlkreislauf der Kolbenkammer (3) oder dass mindestens eine Einspritzdüse (31) indirekt temperiert ausgebildet ist, indem eine Temperaturtransferhülse über die Einspritzdüse geschoben ist, wobei die Temperaturtransferhülse an der Kolbenkammer (3) anliegend ausgebildet ist, so dass sie die Temperatur der Kolbenkammer (3) auf die Einspritzdüse überträgt.

12. Spritzgussvorrichtung nach einem der Ansprüche 1 bis 11, **dadurch gekennzeichnet, dass** eine Isolierung vorzugsweise in Form einer Isolierplatte (47) zwischen einem Kolbenkammerboden mit mindestens einer Einspritzdüse (31) und einer Heizplatte zum Aufheizen der Form (35) für das Spritzgussmaterial vorgesehen ist, wobei die Isolierung eine thermische Trennung zwischen der Spritzgussform und der Kolbenkammer bildet.

13. Spritzgussvorrichtung nach einem der Ansprüche 1 bis 12, **dadurch gekennzeichnet, dass** die Zuführeinrichtung (11) eine Rückstromsperre oder ein Rückschlagventil aufweist, um ein Zurückfliessen des Spritzgussmaterials in die Zuführungseinheit zu verhindern und/oder das eine Rückstromsperre oder ein Rückschlagventil in dem Mischkopf (49, 57) vorgesehen ist, vorzugsweise in dem Zuführkanal.

14. Verfahren zum Herstellen eines Spritzgussteils, mit den folgenden Schritten :
Bereitstellen einer Kolbenkammer (3), die vorzugsweise im Bereich des Bodens mindestens eine Einspritzdüse (31) aufweist und einem in der Kolbenkammer beweglichen Kolben (5), wobei der Kolben ein Ringkolbenelement (7) aufweist, und wobei der Kolben des weiteren eine Mischeinrichtung (49, 57) aufweist, die so ausgebildet ist, dass sie mindestens zwei Komponenten (A, B) eines Spritzgussmaterials (41) geeignet vermischt und in die Kolbenkammer fördert,
Zuführen der Komponenten des Spritzgussmaterials zu der Mischeinrichtung von mindestens einer Dosiereinheit (63),
Vermischen und Fördern der Komponenten durch die Mischeinrichtung in die Kolbenkammer, um diese zu Befüllen und
Bewegen des Ringkolbenelements (7) entgegen der Einspritzdüsen zumindest während des Befüllens der Kolbenkammer zum Erzeugen eines Unterdrucks, und
Bewegen des Ringkolbenelements (7) zu den Einspritzdüsen um einen geeigneten Druck zu erzeugen zum Einspritzen des Spritzgussmaterials aus der Kolbenkammer durch mindestens eine Einspritzdüse in eine Spritzgussform (35).

15. Verfahren nach Anspruch 14, **gekennzeichnet durch**, Erzeugen eines Unterdrucks beim Bewegen des Kolbens entgegen der Einspritzdüse (31), der geeignet ist, dass die Einspritzdüse beim Befüllen der Kolbenkammer von Spritzgussmaterial frei gehalten werden kann.

16. Verfahren nach Anspruch 14 oder 15, **gekennzeichnet durch**, das Bereitstellen einer Mischeinrichtung (49, 57) die eine sich **durch** das Ringkolbenelement erstreckende Zuführungseinheit (11) mit einem Zuführkanal aufweist, wobei der Zuführkanal mindestens eine Wirbelspirale (51, 53) aufweist, **durch** die die Komponenten (A, B) des Spritzgussmaterials zugeführt werden und/oder einen Kugelkäfig der eine Rotationsbewegung ausführen kann, um so die Komponenten (A, B) des Spritzgussmaterials zu vermischen.

17. Verfahren nach einem der Ansprüche 14 bis 16, **gekennzeichnet durch** Temperieren der Kolbenkammer, vorzugsweise **durch** Kühlen der Kolbenkammer (3) **durch** Einfüllen eines geeigneten Kühlmediums zum Temperieren, wobei die Kolbenkammer aus mindestens zwei Teilen ausgebildet ist, einem inneren Teil (3) der die Aufnahme für das Spritzgussmaterial bildet und einen äußeren Teil (37) der den Kühlkörper bildet, in den das Kühlmedium zwischen Kühlrippen (39) gefüllt wird, besonders bevorzugt **durch** Ausbilden der Kolbenkammer (3) mit Kühlbohrungen (43) in die ein geeignetes Kühlmedium zum Temperieren der Kammer gefüllt werden kann.

18. Verfahren nach Anspruch 17, **gekennzeichnet durch**, direktes Temperieren der Einspritzdüse (31), indem diese an einen eigenen Kühlkreislauf oder einen der Kolbenkammer (3) angeschlossen wird oder indirektes Temperieren der Einspritzdüse (31), indem eine Temperaturtransferhülse über die Düse geschoben wird, und wobei die Temperaturtransferhülse an der Kolbenkammer (3) anliegt, um die Temperatur der Kolbenkammer auf die Düse zu übertragen.

19. Verfahren nach einem der Ansprüche 14 bis 18, **gekennzeichnet durch**, das Vorsehen einer Isolierung vorzugsweise in Form einer Isolierplatte (47) zwischen einem Kolbenkammerboden mit mindestens einer Einspritzdüse (31) und einer Heizplatte zum Aufheizen der Form (35) für das einzuspritzende Spritzgussmaterial, zum Bilden einer thermischen Trennung zwischen der Spritzgussform und der Kolbenkammer.

20. Verfahren nach einem der Ansprüche 14 bis 19, **dadurch gekennzeichnet, dass** das Verfahren ein Kaltkammerinjektionsverfahren ist und dass vorzugsweise als Spritzgussmaterial Flüssigsilikon (LSR) verwendet wird.

21. Verfahren nach einem der Ansprüche 14 bis 20, **dadurch gekennzeichnet, dass** der Kolben nach dem Einspritzvorgang nach einer vorbestimmten Zeit zurückgefahren wird, wenn das Spritzgussmaterial in den Einspritzdüsen ausvulkanisiert ist und/oder dass die Einspritzdüse (31) in ihrem Durchmesser so klein gewählt ist, dass die Düse (31) sofort nach Beendigung des Einspritzvorgangs ausvulkanisiert und verschließt und/oder dass mit dem Zurückfahren des Kolbens weiteres Spritzgussmaterial der Materialkammer (35) zugeführt wird, das für den nächsten Zyklus benötigt wird und/oder dass die Plastifizierung des Spritzgussmaterials durch den in der Dosiereinheit (63) erzeugten Druck erfolgt und/oder dass die Mischeinrichtung (49, 57) Verwirbelungen erzeugt, mit denen die Komponenten (A, B) des Spritzgussmaterials vermischt werden können, vorzugsweise homogen.
